Europäisches Patentamt

European Patent Office

Office européen des brevets

(19)

(11) **EP 1 520 890 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.$^7$: **C09D 175/16**, C09G 1/10

(21) Anmeldenummer: **04103841.5**

(22) Anmeldetag: **10.08.2004**

(54) **Pulverlackzusammensetzungen aus Urethan(meth)acrylaten und mikronisierten Wachsen und deren Verwendung**

Powder coating compositions based on urethane(meth)acrylates and micronise waxs and their use

Compositons de revêtement en poudre à partir d'uréthane(meth)acrylate et de cires micronisées et leur utilisation

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **04.10.2003 DE 10346118**

(43) Veröffentlichungstag der Anmeldung:
**06.04.2005 Patentblatt 2005/14**

(73) Patentinhaber: **Degussa AG**
**40474 Düsseldorf (DE)**

(72) Erfinder:
- **Wenning, Andreas, Dr.**
  **48301 Nottuln (DE)**
- **Spyrou, Emmanouil, Dr.**
  **46282 Dorsten (DE)**

(56) Entgegenhaltungen:
**EP-A- 1 411 096**   **US-A1- 2002 099 127**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft mit aktinischer Strahlung härtbare Pulverlackzusammensetzungen auf Basis von Urethan(meth)acrylaten und mikronisierten Wachsen, die zu licht- und wetterstabilen Lackfilmen vernetzen.

Unter aktinischer Strahlung ist elektromagnetische Strahlung wie Röntgenstrahlung, UV-Strahlung, sichtbares Licht oder nahes IR-Licht (NIR), insbesondere UV-Strahlung, oder Korpuskularstrahlung wie Elektronenstrahlen zu verstehen.

Mit aktinischer Strahlung härtbare Pulverlacke finden zunehmend Interesse. Der Grund liegt in der geringeren thermischen Belastung der Substrate, so dass z. B. auch Holz, Holzwerkstoffe, Kunststoffe oder bestimmte Temperatur sensible Metalle oder Metalllegierungen beschichtet werden können. Zudem weisen UV-Pulverlackfilme durch die Trennung von Schmelz- und Härtungsvorgang eine bessere Oberflächenglätte auf als thermisch härtbare Pulverlacke. Mit aktinischer Strahlung härtbare Pulverlacke werden in zahlreichen Patentschriften beschrieben.

Urethan(meth)acrylate stellen eine wichtige Klasse von Bindemitteln für Strahlen härtbare Pulverlacke dar. Die daraus hergestellten Pulverlackzusammensetzungen vernetzen zu Licht und Wetter stabilen, flexiblen und harten Filmen. Sie werden z.B. in der DE 100 58 617, DE 101 63 825, DE 101 63 826 oder DE 101 63 827 beschrieben.

Die Filme dieser beschriebenen Pulverlackzusammensetzungen auf Basis der Urethan(meth)acrylate besitzen jedoch keine speziellen Oberflächeneigenschaften wie insbesondere Glanzreduzierung oder Struktur.

Aufgabe der vorliegenden Erfindung war es, mit aktinischer Strahlung härtbare Pulverlackzusammensetzungen zu finden, die nach der Aushärtung der Lackfilme zu gleichzeitig außenwetterstabilen Beschichtungen mit guter Haftung, niedrigem Glanz und strukturierter Oberfläche führen.

Überraschend konnte diese Aufgabe durch eine Strahlen härtbare Pulverlackzusammensetzung gelöst werden, die als Bindemittel mindestens ein amorphes und/oder kristallines Urethanacrylat mit einem Schmelzpunkt von 40 bis 130 °C, mindestens ein mikronisiertes Wachs und weitere Hilfs und Zusatzstoffe enthält.

Gegenstand der Erfindung sind mit aktinischer Strahlung härtbare Pulverlackzusammensetzungen, enthaltend

   I. 30 bis 98,5 Masse-% eines Bindemittels bestehend aus
        mindestens einem Urethan(meth)acrylat mit einem Schmelzpunkt von 40 bis 130 °C; und
   II. 1 bis 20 Masse-% mindestens eines mikronisierten Wachses
        und
   III. 0,5 bis 50 Masse-% weitere Hilfs- und Zusatzstoffe.

Ebenfalls Gegenstand der Erfindung ist die Verwendung von Pulverlackzusammensetzungen, enthaltend

   I. 30 bis 98,5 Masse-% eines Bindemittels bestehend aus
        mindestens einem Urethan(meth)acrylat mit einem Schmelzpunkt von 40 bis 130 °C; und
   II. 1 bis 20 Masse-% mindestens eines mikronisierten Wachses;
        und
   III. 0,5 bis 50 Masse-% weitere Hilfs- und Zusatzstoffe
        zur Herstellung von mit aktinischer Strahlung härtbaren Pulverlackzusammensetzungen.

Weiterer Gegenstand der Erfindung ist ein Verfahren zur Herstellung von mit aktinischer Strahlung härtbaren Pulverlackzusammensetzungen, enthaltend

   I. 30 bis 98,5 Masse-% eines Bindemittels bestehend aus
        mindestens einem Urethan(meth)acrylat mit einem Schmelzpunkt von 40 bis 130 °C; und
   II. 1 bis 20 Masse-% mindestens eines mikronisierten Wachses
        und
   III. 0,5 bis 50 Masse-% weitere Hilfs- und Zusatzstoffe, bei Temperaturen von 40 bis 150 °C,
        insbesondere in beheizbaren Knetern, insbesondere Extrudern, bei Einhaltung einer Temperaturobergrenze zwischen 120 °C und 150 °C,

Weiterer Gegenstand der Erfindung ist die Verwendung von Zusammensetzungen, enthaltend

   I. 30 bis 98,5 Masse-% eines Bindemittels bestehend aus
        mindestens einem Urethan(meth)acrylat mit einem Schmelzpunkt von 40 bis 130 °C; und
   II. 1 bis 20 Masse-% mindestens eines mikronisierten Wachses;
        und

III. 0,5 bis 50 Masse-% weitere Hilfs- und Zusatzstoffe

zur Herstellung von mit aktinischer Strahlung härtbaren Pulverlackzusammensetzungen.

Das Urethan(meth)acrylat I im Sinne dieser Erfindung besteht aus einem Hydroxylgruppen haltigen Polymer, an das durch Umsetzung mit Di- und/oder Polyisocyanaten und (meth)acrylathaltigen Alkoholen, Urethangruppen und (Meth)Acrylatgruppen angebunden werden.

Das erfindungsgemäße eingesetzte Urethan(meth)acrylat I kann amorpher oder (semi)kristalliner Natur sein. Auch beliebige Mischungen aus amorphen und (semi)kristallinen Urethan(meth)acrylaten sind einsetzbar.

Die Herstellung der erfindungsgemäß eingesetzten amorphen und/oder kristallinen Urethanacrylate wird z. B. in der DE 100 58 617, DE 101 63 825, DE 101 63 826, DE 101 63 827 oder DE 102 06 483.0 näher beschrieben.

Das mikronisierte Wachs II ist ein pulverförmiges Produkt mit einem Schmelzpunkt von mindestens 40 °C. Es besitzt eine sehr hohe Kornfeinhät. In der Regel liegt $d_{50}$ mittlere Korngrößenverteilung unter 50 µm, bevorzugt unter 10 µm.

Beispielsweise handelt es sich beim mikronisierten Wachs um Polyamide, Polyethylene, Polytetrafluorethylene oder Polypropylene. Üblich sind auch Mischungen verschiedener Wachs-Typen oder Modifizierungen dieser Kunststoffe.

Vorteilhaft werden Mischungen aus Polyethylen- und Polytetrafluorethylen-Wachsen eingesetzt. Sie sind erfindungsgemäß besonders geeignet und reduzieren den Glanz einer Beschichtung und geben ihr eine Struktur.

Derartige Wachse sind z. B. Ceraflour® 960, Ceraflour® 961, Ceraflour® 967, Ceraflour® 968, Ceraflour® 969, Ceraflour® 990, Ceraflour® 996, Ceraflour® 430 RC 836 (alle von Byk-Cera bv), Lanco® 1840, Lanco® TF 1830 (von Lubrizol Coating Additives GmbH) im Handel erhältlich.

Zur Strahlenhärtung der erfindungsgemäßen Pulverlackzusammensetzung sind elektromagnetische Strahlung wie Röntgenstrahlung, UV-Strahlung, sichtbares Licht oder nahes IR-Licht (NIR), insbesondere UV-Strahlung, oder Korpuskularstrahlung wie Elektronenstrahlen geeignet.

Werden beschleunigte Elektronenstrahlen verwendet, werden aus der Pulverlackzusammensetzung freie Radikale in einer Anzahl generiert, die eine extrem schnelle Polymerisation der reaktiven Acrylatgruppen gewährleistet. Bevorzugt werden Strahlungsdosen von 5 bis 15 Mrad verwendet.

Im Falle der UV-Härtung werden als weitere erforderliche Einsatzstoffe III UV-Initiatoren verwendet, die prinzipiell bekannt sind aus herkömmlichen flüssigen UV-härtenden Systemen, z. B. EP 633 912. Dies sind Stoffe, die bei Bestrahlung mit UV-Licht in Radikale zerfallen und damit die Polymerisation starten. Als UV-Initiatoren kommen in Frage z. B. 2,2'-Diethoxyacetophenon, Hydroxycyclohexylphenylketon, Benzophenon, 2-Hydroxy-2-methyl-1-phenylpropan-1-on, Xanthon, Thioxanthon, Benzildimethylketal, usw. Solche UV-Initiatoren werden kommerziell angeboten, z. B. IRGACURE® 184 oder DEGACURE® 1173 von Ciba. Der Anteil des UV-Initiators am Gesamtsystem beträgt etwa 0,5 bis 5 Gew.-%.

Der Einsatz von Foto-Initiatoren, z. B. Thioxanthone, Phosphinoxide, Metallocene, tertiäre Aminobenzole oder tertiäre Aminobenzophenone, die bei Bestrahlung mit sichtbarem Licht in Radikale zerfallen, ist ebenso möglich.

Optionale Zusatzstoffe III sind acrylat- oder methacrylathaltige Verbindungen, wie z. B. das Triacrylat von Tris (2-hydroxyethyl)isocyanurat (SR 386, Sartomer), und Haftvermittler, die in untergeordneten Anteilen von 0 bis 20 Gew.-% eingesetzt werden können, um die Beschichtungseigenschaften zu modifizieren.

Weitere bei Pulverlacken übliche Zusatzstoffe III sind Verlaufmittel, Lichtstabilisatoren, und Entgasungsmittel. Diese können in 0 bis 5 Gew.-% verwendet werden. Außerdem möglich ist der Einsatz von Pigmenten und Füllstoffe, z. B. Metalloxide wie Titandioxid, und Metallhydroxide, Sulfate, Sulfide, Carbonate, Silicate, Talkum, Ruß usw. in Gewichtsanteilen von 0 bis 50 %.

Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintern erfolgen. Geeignete Substrate sind z. B. unbehandelte oder vorbehandelte metallische Substrate, Holz, Holzwerkstoffe, Kunststoffe, Glas oder Papier.

Gegenstand sind auch Beschichtungen mit niedrigen Glanz und strukturierter Oberfläche enthaltend eine mit aktinischer Strahlung härtbare Pulverlackzusammensetzung enthaltend

I. 30 bis 98,5 Masse-% eines Bindemittels bestehend aus

mindestens einem Urethan(meth)acrylat mit einem Schmelzpunkt von 40 bis 130 °C; und

II. 1 bis 20 Masse-% mindestens eines mikronisierten Wachses; und

III. 0,5 bis 50 Masse-% weitere Hilfs- und Zusatzstoffe.

Die aus den erfindungsgemäßen Pulverlackzusammensetzungen hergestellten erfindungsgemäßen Beschichtungen sind wetterstabil, besitzen eine gute Haftung, einen niedrigen Glanz und eine strukturierte Oberfläche.

Die Erfindung wird durch die folgenden Beispiele näher erläutert:

**Beispiele:**

**1. Herstellung des amorphen Urethanacrylats**

65 kg Isophthalsäure, 6 kg Monoethylenglykol, 19 kg Neopentylglykol und 26 kg Cyclohexandimethanol wurden mit 0,2 Massenprozente n-Butylzinntrioctonoat versetzt und in einer mit einer Destillationskolonne versehenen Apparatur unter Stickstoff und Rühren auf 190 °C erhitzt. Diese Temperatur wurde im Laufe der Wasserabscheidung langsam auf 230 °C erhöht. Nachdem etwa 98 % der theoretischen Wassermenge abdestilliert worden waren, wurde das Produkt bei 120 °C portionsweise unter kräftigen Rühren zu einer Mischung aus 3,2 kg eines 1 : 1-Adduktes aus IPDI und Hydroxyethylacrylat, 0,7 kg IONOL CP und 0,2 kg Dibutylzinndilaurat gegeben. Nach etwa einer Stunde Rühren lag der NCO-Gehalt unter 0,1 %. Die heiße Reaktionsmischung wurde aus dem Kolben auf eine Folie gegossen. Sobald die Reaktionsmasse erstarrt und abgekühlt war, wurde sie mechanisch zerkleinert und gemahlen. Der Schmelzbereich dieses Produktes lag bei 82 bis 86 °C.

**2. Herstellung des kristallinen Urethanacrylats**

230 kg Dodecandisäure und 66 kg Monoethylenglykol wurden mit 0,2 Massenprozente n-Butylzinntrioctonoat versetzt und in einer mit einer Destillationskolonne versehenen Apparatur unter Stickstoff und Rühren auf 190 °C erhitzt. Diese Temperatur wurde im Laufe der Wasserabscheidung langsam auf 230 °C erhöht. Nachdem etwa 98 % der theoretischen Wassermenge abdestilliert worden waren, wurde das Produkt bei 120 °C portionsweise unter kräftigen Rühren zu einer Mischung aus 63 kg eines 1 : 1-Adduktes aus IPDI und Hydroxyethylacrylat, 3,2 kg IONOL CP und 0,6 kg Dibutylzinndilaurat gegeben. Nach etwa einer Stunde Rühren lag der NCO-Gehalt unter 0,1 %. Die heiße Reaktionsmischung wurde aus dem Kolben auf eine Folie gegossen. Sobald die Reaktionsmasse erstarrt und abgekühlt war, wurde sie mechanisch zerkleinert und gemahlen. Der Schmelzpunkt dieses Produktes lag bei 77 °C.

**3. Herstellung der erfindungsgemäßen Pulverlackzusammensetzung**

646 g des amorphen Urethanacrylates aus Beispiel 1 und 114 g des kristallinen Urethanacrylates aus Beispiel 2 wurden mit 10 g Resiflow PV 88 (Verlaufmittel, Worlee-Chemie), 10 g Worlee Add 900 (Entgasungsmittel, Worlee-Chemie), 10 g Irgacure 2959 (Fotoinitiator, Ciba Specialty Chemicals), 20 g Irgacure 819 (Fotoinitiator, Ciba Specialty Chemicals), 150 g Kronos 2160 (Weißpigment, Kronos Titan) und 40 g Ceraflour 969 (mikronisiertes Wachs, Byk-Cera) versetzt. Die zerkleinerten Einsatzstoffe wurden in einem Kollergang innig vermischt und anschließend im Extruder bis maximal 130 °C homogenisiert. Nach dem Erkalten wurde das Extrudat gebrochen und mit einer Stiftsmühle im Falle des Vergleichsversuchs mit und im Falle des erfindungsgemäßen Beispiels ohne Zusatz von Kühlmitteln (flüssiger Stickstoff oder Trockeneis) auf eine Korngröße < 100 µm gemahlen. Das so hergestellte Pulver wurde mit einer elektrostatischen Pulverspritzanlage bei 60 KV auf entfettete, Aluminiumbleche appliziert. Dann wurde unter IR-Bestrahlung aufgeschmolzen und mit Hilfe von UV-Strahlen (Gallium dotierter Strahler, ca. 4700 mJ/cm$^2$) ausgehärtet.

**4. Herstellung der erfindungsgemäßen Pulverlackzusammensetzung**

Die Pulverlackzusammensetzung wurde analog zur erfindungsgemäßen Pulverlackzusammensetzung aus Beispiel 3 hergestellt. Anstelle von Ceraflour® 969 wurde Lanco® 1840 eingesetzt.

**5. Herstellung der Pulverlackzusammensetzung ohne mikronisiertem Wachs (Vergleich)**

Die Pulverlackzusammensetzung wurde analog zu den erfindungsgemäßen Pulverlackzusammensetzungen aus Beispiel 3 und 4 hergestellt. Es wurde nur auf die Zugabe des mikronisierten Wachses verzichtet.

Die Prüfwerte sind in der Tabelle 1 zusammengefasst:

Tabelle 1

| Versuch | Mikronisiertes Wachs | Substrat | Glanz[1] 60° [Skt] | GS[2] | Oberfläche |
|---------|---------------------|----------|--------------------|-------|------------|
| 3 | 100 A1U | Alu 46 | 20 | 0-1 | Feine, gleichmäßige Struktur |
| 4 | 100 A2U | Alu 46 | 32 | 0 | Feine, gleichmäßige Struktur |
| 5 (Vergleich) | Ohne Wachs | Alu 46 | 80 | 0 | glatt |

1: Glanz im 60°-Winkel nach Gardner (ASTM-D 5233)

2: Gitterschnitt (DIN EN ISO 2409)
(Skala 0 (kein Haftungsverlust) bis 5 (totaler Haftungsverlust))

Lediglich die erfindungsgemäßen Versuche 3 und 4 zeigen in der Beschichtung einen niedrigen Glanz und eine strukturierte Oberfläche auf. Die Haftung bleibt auf einem sehr guten Niveau. Das nicht erfindungsgemäße Vergleichsbeispiel 5 hingegen besitzt eine glänzende und glatte Filmoberfläche.

**Patentansprüche**

1. Mit aktinischer Strahlung härtbare Pulverlackzusammensetzung, enthaltend

    I. 30 bis 98,5 Masse-% eines Bindemittels bestehend aus
      mindestens einem Urethan(meth)acrylat mit einem Schmelzpunkt von 40 bis 130 °C; und
    II. 1 bis 20 Masse-% mindestens eines mikronisierten Wachses;
    und
    III. 0,5 bis 50 Masse-% weitere Hilfs- und Zusatzstoffe.

2. Mit aktinischer Strahlung härtbare Pulverlackzusammensetzung nach Anspruch 1,
**dadurch gekennzeichnet,**
**dass** die Komponente I aus einem Hydroxylgruppen haltigen Polymer besteht, an das durch Umsetzung mit Di- und/oder Polyisocyanaten und (meth)acrylathaltigen Alkoholen, Urethangruppen und (Meth)Acrylatgruppen angebunden werden.

3. Mit aktinischer Strahlung härtbare Pulverlackzusammensetzung nach mindestens einem der vorherigen Ansprüche,
**dadurch gekennzeichnet,**
**dass** die Komponente I amorph ist.

4. Mit aktinischer Strahlung härtbare Pulverlackzusammensetzung nach mindestens einem der vorherigen Ansprüche,
**dadurch gekennzeichnet,**
**dass** die Komponente I (semi)kristallin ist.

5. Mit aktinischer Strahlung härtbare Pulverlackzusammensetzung nach mindestens einem der vorherigen Ansprüche,
**dadurch gekennzeichnet,**
**dass** die Komponente I aus einer Mischung aus amorphen und (semi)kristallinen Urethan(meth)acrylaten besteht.

6. Mit aktinischer Strahlung härtbare Pulverlackzusammensetzung nach mindestens einem der vorherigen Ansprüche,
**dadurch gekennzeichnet,**
**dass** die Komponente II aus einem pulverförmigen Produkt mit einem Schmelzpunkt von mindestens 40 °C besteht.

7. Mit aktinischer Strahlung härtbare Pulverlackzusammensetzung nach mindestens einem der vorherigen Ansprüche,
**dadurch gekennzeichnet,**

**dass** die Komponente II eine mittlere Korngrößenverteilung $d_{50}$ von kleiner als 50 µm aufweist.

8. Mit aktinischer Strahlung härtbare Pulverlackzusammensetzung nach mindestens einem der vorherigen Ansprüche,
   **dadurch gekennzeichnet,**
   **dass** die Komponente II einen $d_{50}$-Wert kleiner als 10 µm besitzt.

9. Mit aktinischer Strahlung härtbare Pulverlackzusammensetzung nach mindestens einem der vorherigen Ansprüche,
   **dadurch gekennzeichnet,**
   **dass** die Komponente II aus mindestens einem Vertreter aus der Gruppe der Polyamide, Polyethylene, Polytetrafluorethylene oder Polypropylene besteht.

10. Mit aktinischer Strahlung härtbare Pulverlackzusammensetzung nach mindestens einem der vorherigen Ansprüche,
    **dadurch gekennzeichnet,**
    **dass** die Komponente II aus einer Mischung aus mindestens einem Polyethylen und mindestens einem Polytetrafluorethylen besteht.

11. Mit aktinischer Strahlung härtbare Pulverlackzusammensetzung nach mindestens einem der vorherigen Ansprüche,
    **dadurch gekennzeichnet,**
    **dass** die Komponente III aus mindestens einem Vertreter aus der Gruppe der Foto-Initiatoren, Verlaufmittel, Lichtstabilisatoren, Entgasungsmittel, Pigmente, Füllstoffe oder Haflvermittler besteht.

12. Verwendung von Zusammensetzungen
    enthaltend

       I. 30 bis 98,5 Masse-% eines Bindemittels bestehend aus
           mindestens einem Urethan(meth)acrylat mit einem Schmelzpunkt von 40 bis 130 °C; und
       II. 1 bis 20 Masse-% mindestens eines mikronisierten Wachses
       und
       III. 0,5 bis 50 Masse-% weitere Hilfs- und Zusatzstoffe.
           zur Herstellung von mit aktinischer Strahlung härtbaren Pulverlackzusammensetzungen.

13. Verwendung von Zusammensetzungen nach Anspruch 12,
    **dadurch gekennzeichnet,**
    **dass** die Komponente I durch Reaktion aus mindestens einem Hydroxylgruppen haltigen Polymer mit mindestens einem Di- und/oder Polyisocyanat und mindestens einem (meth)acrylathaltigen Alkohol aufgebaut ist.

14. Verwendung von Zusammensetzungen nach Anspruch 12 oder 13,
    **dadurch gekennzeichnet,**
    **dass** die Komponenten I bis III nach mindestens einem der Ansprüche 2 bis 12 enthalten sind.

15. Verfahren zur Herstellung von mit aktinischer Strahlung härtbaren Pulverlackzusammensetzungen
    enthaltend

       I. 30 bis 98,5 Masse-% eines Bindemittels bestehend aus
           mindestens einem Urethan(meth)acrylat mit einem Schmelzpunkt von 40 bis 130 °C; und
       II. 1 bis 20 Masse-% mindestens eines mikronisierten Wachses
       und
       III. 0,5 bis 50 Masse-% weitere Hilfs- und Zusatzstoffe,
           bei Temperaturen von 40 bis 150 °C.

16. Verfahren zur Herstellung von mit aktinischer Strahlung härtbaren Pulverlackzusammensetzungen nach Anspruch 15,
    enthaltend

I. 30 bis 98,5 Masse-% eines Bindemittels bestehend aus

mindestens einem Urethan(meth)acrylat mit einem Schmelzpunkt von 40 bis 130 °C; und

II. 1 bis 20 Masse-% mindestens eines mikronisierten Wachses; und

III. 0,5 bis 50 Masse-% weitere Hilfs- und Zusatzstoffe,

bei Einhaltung einer Temperaturumbergrenze zwischen 120 °C und 150 °C, in beheizbaren Knetern, insbesondere Extrudern.

**17.** Verwendung der mit aktinischer Strahlung härtbaren Pulverlackzusammensetzungen, enthaltend

I. 30 bis 98,5 Masse-% eines Bindemittels bestehend aus

mindestens einem Urethan(meth)acrylat mit einem Schmelzpunkt von 40 bis 130 °C; und

II. 1 bis 20 Masse-% mindestens eines mikronisierten Wachses; und

III. 0,5 bis 50 Masse-% weitere Hilfs- und Zusatzstoffe,

zur Herstellung von licht- und wetterstabilen Beschichtungen mit guter Haftung, niedrigem Glanz und strukturierter Oberfläche.

**18.** Beschichtungen mit niedrigem Glanz und strukturierter Oberfläche, enthaltend eine mit aktinischer Strahlung härtbare Pulverlackzusammensetzung,
enthaltend

I. 30 bis 98,5 Masse-% eines Bindemittels bestehend aus

mindestens einem Urethan(meth)acrylat mit einem Schmelzpunkt von 40 bis 130 °C; und

II. 1 bis 20 Masse-% mindestens eines mikronisierten Wachses; und

III. 0,5 bis 50 Masse-% weitere Hilfs- und Zusatzstoffe.

## Claims

**1.** A powder coating composition curable with actinic radiation and comprising

I. from 30 to 98.5% by mass of a binder comprising at least one urethane (meth)acrylate having a melting point of from 40 to 130°C and

II. from 1 to 20% by mass of at least one micronized wax and

III. from 0.5 to 50% by mass of further auxiliaries and additives.

**2.** A powder coating composition curable with actinic radiation, according to claim 1,
**characterized in that**
component I comprises a hydroxyl-containing polymer to which urethane groups and (meth)acrylate groups are attached by reaction with di- and/or polyisocyanates and (meth)acrylate-containing alcohols.

**3.** A powder coating composition curable with actinic radiation, according to one or both of the preceding claims,
**characterized in that**
component I is amorphous.

**4.** A powder coating composition curable with actinic radiation, according to at least one of the preceding claims,
**characterized in that**
component I is (semi)crystalline.

**5.** A powder coating composition curable with actinic radiation, according to at least one of the preceding claims,
**characterized in that**
component I comprises a mixture of amorphous and (semi)crystalline urethane (meth)acrylates.

**6.** A powder coating composition curable with actinic radiation, according to at least one of the preceding claims,
**characterized in that**
component II comprises a pulverulent product having a melting point of at least 40°C.

**7.** A powder coating composition curable with actinic radiation, according to at least one of the preceding claims, **characterized in that**
component II has an average particle size distribution $d_{50}$ of less than 50 µm.

**8.** A powder coating composition curable with actinic radiation, according to at least one of the preceding claims, **characterized in that**
component II has a $d_{50}$ of less than 10 µm.

**9.** A powder coating composition curable with actinic radiation, according to at least one of the preceding claims, **characterized in that**
component II comprises at least one representative from the group consisting of polyamides, polyethylenes, polytetrafluoroethylenes, and polypropylenes.

**10.** A powder coating composition curable with actinic radiation, according to at least one of the preceding claims, **characterized in that**
component II comprises a mixture of at least one polyethylene and at least one polytetrafluoroethylene.

**11.** A powder coating composition curable with actinic radiation, according to at least one of the preceding claims, **characterized in that**
component III comprises at least one representative from the group consisting of photoinitiators, leveling agents, light stabilizers, devolatilizers, pigments, fillers, and adhesion promoters.

**12.** The use of a composition comprising

I. from 30 to 98.5% by mass of a binder comprising at least one urethane (meth)acrylate having a melting point of from 40 to 130°C and
II. from 1 to 24% by mass of at least one micronized wax and
III. from 0.5 to 50% by mass of further auxiliaries and additives for producing a powder coating composition curable with actinic radiation.

**13.** The use of a composition according to claim 12, **characterized in that**
component I is synthesized by reacting at least one hydroxyl-containing polymer with at least one di- and/or polyisocyanate and with at least one (meth)acrylate-containing alcohol.

**14.** The use of a composition according to either of claims 12 and 13, **characterized in that**
components I to III according to at least one of claims 2 to 12 are present.

**15.** A process for preparing a powder coating composition curable with actinic radiation and comprising

I. from 30 to 98.5% by mass of a binder comprising at least one urethane (meth)acrylate having a melting point of from 40 to 130°C and
II. from 1 to 20% by mass of at least one micronized wax and
III. from 0.5 to 50% by mass of further auxiliaries and additives, at a temperature of from 40 to 150°C.

**16.** A process according to claim 15 for producing a powder coating composition curable with actinic radiation and comprising

I. from 30 to 98.5% by mass of a binder comprising at least one urethane (meth)acrylate having a melting point of from 40 to 130°C and
II. from 1 to 20% by mass of at least one micronized wax and
III. from 0.5 to 50% by mass of further auxiliaries and additives, observing an upper temperature limit of from 120°C to 150°C, in a heatable kneading apparatus, in particular an extruder.

**17.** The use of a powder coating composition curable with actinic radiation and comprising

I. from 30 to 98.5% by mass of a binder comprising at least one urethane (meth)acrylate having a melting point of from 40 to 130°C and

II. from 1 to 20% by mass of at least one micronized wax and

III. from 0.5 to 50% by mass of further auxiliaries and additives, for producing a light-stable and weather-stable coating having good adhesion, low gloss, and a textured surface.

**18.** A coating having low gloss and a textured surface, comprising a powder coating composition curable with actinic radiation and comprising

I. from 30 to 98.5% by mass of a binder comprising at least one urethane (meth)acrylate having a melting point of from 40 to 130°C and

II. from 1 to 20% by mass of at least one micronized wax and

III. from 0.5 to 50% by mass of further auxiliaries and additives.


**Revendications**

**1.** Composition de revêtement en poudre durcissable par rayonnement actinique, contenant

I. 30 % à 98,5 % en poids d'un liant constitué d'au moins un uréthan(méth)acrylate ayant un point de fusion de 40°C à 130°C,

et

II. 1 % à 20 % en poids d'au moins une cire micronisée, et

III. 0,5 % à 50 % en poids d'autres adjuvants et additifs.

**2.** Composition de revêtement en poudre durcissable par rayonnement actinique selon la revendication 1, **caractérisé en ce que** le composant I est constitué d'un polymère contenant des groupes hydroxyle, auquel des groupes uréthane et des groupes (méth)acrylate sont liés par mise en réaction avec des di et/ou polyisocyanates et des alcools contenant du (méth)acrylate.

**3.** Composition de revêtement en poudre durcissable par rayonnement actinique selon au moins l'une des revendications précédentes, **caractérisé en ce que** le composant I est amorphe.

**4.** Composition de revêtement en poudre durcissable par rayonnement actinique selon au moins l'une des revendications précédentes, **caractérisé en ce que** le composant I est (semi-)cristallin.

**5.** Composition de revêtement en poudre durcissable par rayonnement actinique selon au moins l'une des revendications précédentes, **caractérisé en ce que** le composant I est constitué d'un mélange d'uréthan(méth)acrylates amorphes et (semi-) cristallins.

**6.** Composition de revêtement en poudre durcissable par rayonnement actinique selon au moins l'une des revendications précédentes, **caractérisé en ce que** le composant II est constitué d'un produit pulvérulent ayant un point de fusion d'au moins 40°C.

**7.** Composition de revêtement en poudre durcissable par rayonnement actinique selon au moins l'une des revendications précédentes, **caractérisé en ce que**

le composant II présente une distribution granulométrique $d_{50}$ inférieure à 50 µm.

8. Composition de revêtement en poudre durcissable par rayonnement actinique selon au moins l'une des revendications précédentes,
   **caractérisé en ce que**
   le composant II possède une valeur dso inférieure à 10 µm.

9. Composition de revêtement en poudre durcissable par rayonnement actinique selon au moins l'une des revendications précédentes,
   **caractérisé en ce que**
   le composant II est constitué d'au moins un représentant du groupe des polyamides, polyéthylènes, polytétrafluoroéthylènes ou polypropylènes.

10. Composition de revêtement en poudre durcissable par rayonnement actinique selon au moins l'une des revendications précédentes,
    **caractérisé en ce que**
    le composant II est constitué d'un mélange d'au moins un polyéthylène et d'au moins un polytétrafluoroéthylène.

11. Composition de revêtement en poudre durcissable par rayonnement actinique selon au moins l'une des revendications précédentes,
    **caractérisé en ce que**
    le composant III est constitué d'au moins un représentant du groupe des photo-initiateurs, agents de dilatation, stabilisants à la lumière, agents de dégazage, pigments, matières de charge ou agents adhésifs.

12. Utilisation de compositions contenant

    I. 30 % à 98,5 % en poids d'un liant constitué d'au moins un uréthan(méth)acrylate ayant un point de fusion de 40°C à 130°C,
    et
    II. 1 %à 20 % en poids d'au moins une cire micronisée,
    et
    III. 0,5 % à 50 % en poids d'autres adjuvants et additifs, pour la fabrication de compositions de revêtement en poudre durcissables par rayonnement actinique.

13. Utilisation de compositions selon la revendication 12,
    **caractérisée en ce que**
    le composant I est réalisé par réaction d'au moins un polymère contenant des groupes hydroxyle avec au moins un di et/ou polyisocyanate et au moins un alcool contenant du (méth)acrylate.

14. Utilisation de compositions selon la revendication 12 ou 13,
    **caractérisée en ce que**
    les composants I à III sont contenus selon au moins l'une des revendications 2 à 12.

15. Procédé de préparation de compositions de revêtement en poudre durcissables par rayonnement actinique contenant

    I. 30 % à 98,5 % en poids d'un liant constitué d'au moins un uréthan(méth)acrylate ayant un point de fusion de 40 à 130°C,
    et
    II. 1 % à 20 % en poids d'au moins une cire micronisée,
    et
    III. 0,5 % à 50 % en poids d'autres adjuvants et additifs, à des températures de 40°C à 150°C.

16. Procédé de préparation de compositions de revêtement en poudre durcissables par rayonnement actinique selon la revendication 15, contenant

    I. 30 % à 98,5 % en poids d'un liant constitué d'au moins un uréthan(méth)acrylate ayant un point de fusion de 40° à 130°C,

et

II. 1 % à 20 % en poids d'au moins une cire micronisée,

et

III. 0,5 % à 50 % en poids d'autres adjuvants et additifs, en respectant une limite supérieure de température entre 120°C et 150°C, dans des malaxeurs chauffants, en particulier des extrudeuses.

17. Utilisation des compositions de revêtement en poudre durcissables par rayonnement actinique contenant

I. 30 % à 98,5 % en poids d'un liant constitué d'au moins un uréthan(méth)acrylate ayant un point de fusion de 40°C à 130°C,

et

II. 1 % à 20 % en poids d'au moins une cire micronisée,

et

III. 0,5°% à 50 % en poids d'autres adjuvants et additifs pour la préparation de revêtements stables à la lumière et aux conditions atmosphériques, ayant une bonne adhérence, un faible brillant et une surface structurée.

18. Revêtements ayant un faible brillant et une surface structurée, contenant une composition de revêtement en poudre durcissable par rayonnement actinique,

contenant

I. 30 % à 98,5 % en poids d'un liant constitué d'au moins un uréthan(méth)acrylate ayant un point de fusion de 40°C à 130°C,

et

II. 1 % à 20 % en poids d'au moins une cire micronisée,

et

III. 0,5 % à 50 % en poids d'autres adjuvants et additifs.